(19) Europäisches Patentamt
European Patent Office
Office européen des brevets

(11) EP 1 129 038 B1

(12) # FASCICULE DE BREVET EUROPEEN

(45) Date de publication et mention de la délivrance du brevet:
**02.04.2003 Bulletin 2003/14**

(21) Numéro de dépôt: **99957160.7**

(22) Date de dépôt: **14.06.1999**

(51) Int Cl.^7^: **C02F 5/14**, C02F 5/12

(86) Numéro de dépôt international:
**PCT/FR99/01408**

(87) Numéro de publication internationale:
**WO 99/067177 (29.12.1999 Gazette 1999/52)**

(54) **COMPOSITION INHIBITRICE D'ENTARTRAGE ET DE CORROSION DE CIRCUITS D'EAU**

VERBINDUNG ZUR VERHINDERUNG VON ABLAGERUNGEN IN ROHRLEITUNGEN EINES WASSERVERSORGUNGSSYSTEMS

COMPOSITION INHIBITING PIPE SCALING AND CORROSION IN A WATER SUPPLY SYSTEM

(84) Etats contractants désignés:
**BE CH DE ES FR GB IT LI LU NL**

(30) Priorité: **23.06.1998 FR 9807918**

(43) Date de publication de la demande:
**05.09.2001 Bulletin 2001/36**

(73) Titulaire: **Concorde Chimie**
**72230 Arnage (FR)**

(72) Inventeur: **MORAN, Francis**
**F-75019 Paris (FR)**

(74) Mandataire: **Clisci, Serge et al**
**S.A. FEDIT-LORIOT**
**CONSEILS EN PROPRIETE INDUSTRIELLE**
**38, avenue Hoche**
**75008 Paris (FR)**

(56) Documents cités:
**EP-A- 0 375 615**
**EP-A- 0 451 434**
**EP-A- 0 677 485**
**EP-A- 0 681 995**

Remarques:
Le dossier contient des informations techniques présentées postérieurement au dépôt de la demande et ne figurant pas dans le présent fascicule.

EP 1 129 038 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

## Description

### *Domaine de l'invention*

La présente invention a trait à une nouvelle composition inhibitrice d'entartrage et de corrosion, qui contient au moins un composé phosphonocarboxylique de formule I ci-après pour protéger les surfaces métalliques de circuits ou installations où circule de l'eau en tant que fluide énergétique ou thermique.

### *Art antérieur*

On sait que les composés phosphonocarboxyliques de formule

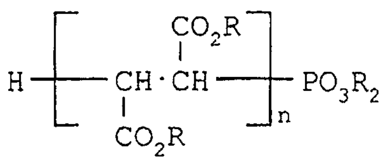

(I)

dans laquelle

n est un nombre entier tel que $1 \leq n \leq 8$, et chaque R représente indépendamment des autres un atome d'hydrogène, un atome d'un métal alcalin (notamment Na ou K), un groupe ammonium (notamment $NH_4^+$) ou un groupe alkyle en $C_1$-$C_4$,

et leurs mélanges,

ont déjà été préconisés en tant qu'agents inhibiteurs de corrosion.

On connaît en particulier le produit commercialisé par la société dite ALBRIGHT & WILSON sous la nomenclature de "BRICORR® 288", qui est un mélange de composés de formule I, où R est Na et n est inférieur à 5 (i.e. mélange de composés où n est 1, 2, 3 et 4).

Il se trouve que ces composés de formule I sont en tant qu'inhibiteurs de corrosion efficaces vis-à-vis du cuivre mais guère efficaces vis-à-vis du fer, d'une part, et en tant qu'inhibiteurs d'entartrage insuffisamment efficaces, d'autre part. Voir à cet effet les essais comparatifs soumis plus loin.

### *But de l'invention*

Selon l'invention, on se propose de fournir une nouvelle solution technique permettant d'inhiber la corrosion et l'entartrage des surfaces métalliques en contact avec de l'eau, agent corrosif, intervenant en tant que fluide énergétique ou thermique, d'une part, et d'améliorer (i) les propriétés anticorrosion des composés phosphonocarboxyliques précités vis-à-vis du fer sans diminution substantielle de leurs propriétés anticorrosion vis-à-vis du cuivre, et (ii) les propriétés anti-tartre desdits composés phosphonocarboxyliques, d'autre part.

### *Objet de l'invention*

La solution technique que l'on préconise selon l'invention met en oeuvre, pour résoudre le problème lié à l'insuffisance des propriétés anticorrosion et anti-tartre des composés phosphonocarboxyliques, une composition aqueuse contenant un composant phosphonocarboxylique (PC) et un composant polyamine (AF), et le cas échéant un composant tensioactif (TA) en tant que produit dispersant.

La composition inhibitrice d'entartrage et de corrosion pour protéger les surfaces métalliques d'installations utilisant de l'eau en tant que fluide énergétique ou thermique, qui contient un composant phosphonocarboxylique (PC) et un composant amine grasse (AF), plus le cas échéant un composant tensioactif (TA), est caractérisée en cc qu'elle comprend :

(A) un composé phosphonocarboxylique (PC) choisi parmi l'ensemble constitué par :

(a) les composés de formule I :

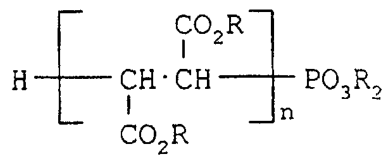

(I)

dans laquelle

n est un nombre entier tel que $1 \leq n \leq 8$, et chaque R représente indépendamment des autres un atome d'hydrogène, un atome d'un métal alcalin (notamment Na ou K), un groupe ammonium (notamment $NH_4^+$) ou un groupe alkyle en $C_1$-$C_4$, et

(b) leurs mélanges, et

(B) au moins un composé amine grasse (AF) de formule II :

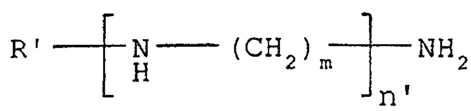

(II)

dans laquelle

- R' représente un radical hydrocarboné aliphatique saturé ou insaturé en $C_{12}$-$C_{22}$,
- m représente un nombre entier ayant une valeur comprise entre 2 et 8 inclus, et
- n' représente un nombre entier ayant une valeur comprise entre 0 et 7 inclus.

***Description détaillée de l'invention***

Les composés phosphonocarboxyliques peuvent être utilisés tels qu'ils sont fournis dans le commerce, seuls ou mélangés entre eux, sous leurs formes pures ou techniques. En pratique, ces composés PC sont fournis mélangés entre eux, en solution aqueuse à environ 50 % p/p de matière sèche, comme cela est le cas du BRICORR® 288 précité.

Le composant AF est un produit connu dans la technique sous la nomenclature d'amine filmante. Ledit composant AF peut être constitué d'une ou plusieurs amines (n' = 0) ou polyamines (n' ≠ 0) grasses. Les substances AF peuvent être utilisées telles qu'on peut les obtenir dans le commerce, seules ou mélangées entre elles, sous leurs formes pures ou techniques. Parmi les polyamines commercialisées qui conviennent, on peut notamment citer les produits connus sous les noms de marque NORAM®, DUOMEEN®, DINORAM®, TRINORAM®, POLYRAM®, LILAMIN® et CEMULCAT® qui renferment au moins une polyamine de formule II. Parmi ces derniers produits, on peut mentionner le "DINORAM® O" qui renferme approximativement 75 % en poids sec d'oléylaminopropylèneamine, 9% en poids sec de stéarylaminopropylèneamine et 6 % en poids sec d'hexadécylaminopropylèneamine.

De façon avantageuse,

(C) un composant tensioactif (TA) sera associé au mélange (A)-(B) du composant PC et du composant AF.

D'un point de vue pratique la composition selon l'invention contiendra avantageusement dans de l'eau :

(A) 10 à 100 parties en poids de composant PC,
(B) 1 à 10 parties en poids de composant AF, et
(C) 5 à 50 parties en poids de composant TA.

Le composant TA est choisi parmi l'ensemble constitué par les tensioactifs ioniques, les tensioactifs non-ioniques et leurs mélanges. Parmi les composés TA, qui conviennent ici en tant que produits dispersants, on peut notamment utiliser les composés cités dans l'article de J. PARIS, *Labo-Pharma Problèmes et Techniques, 1976, 258, 861-874* et leurs mélanges.

Parmi ces composés, on recommande (i) les composés C1 et C2 définis ci-après, et (ii) leurs mélanges. On préfère ici plus particulièrement

(C1) les composés ammonium quaternaire du type alkyldiméthylammonium qui répondent à la formule III :

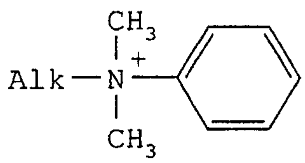

$Hal^-$ (III)

où Alk est un reste alkyle en $C_6$-$C_{22}$ à chaîne hydrocarbonée linéaire ou ramifiée, et Hal est un atome d'halogène (de préférence Cl), et leurs mélanges.

Des chlorures d'alkyldiméthylbenzylammonium de formule III ci-dessus sont notamment commercialisés sous les noms de marque NORALIUM® DA 50, CATIGENE® OM 50, CATIGENE® OM 100, DODIGENE® 226, DODIGENE® 1828, DODIGENE® 5462 et EMCOL® CC 36.

Le cas échéant, on peut substituer à une portion du composé C1 ou ajouter audit composant C1 :

(C2) au moins un composé amine oxyalkylénée de formule IV :

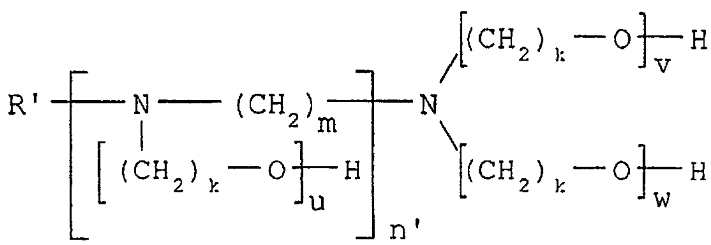

(IV)

dans laquelle

R', m et n' sont définis comme indiqué ci-dessus,
k est un nombre entier ayant pour valeur 2 ou 3,
u, v et w sont des nombres entiers tels que la somme v+w+(un') soit comprise entre 2 et 22.

D'autres substances peuvent, si cela est nécessaire, être incorporées dans le mélange selon l'invention, notamment un composant polyélectrolyte (PE) du type polyacrylique (ou polyacrylate), polyméthacrylique (ou polyméthacrylate) ou polymaléique (ou polymaléate) tel que décrit dans EP-A-0 065 609 et/ou du type polysulfonique (ou polysulfonate), tel que décrit dans WO-A-96/04411, d'une part, et un composant amine alcalinisante (AA), qui est volatil et qui comprend la cyclohexylamine, la morpholine, les aminoalcools et les dérivés d'hydroxylamine (tels que la N,N-diéthylhydroxylamine et la N-isopropylhydroxylamine) qui sont visés dans WO-A-96/04411, d'autre part.

La composition aqueuse selon l'invention est obtenue par mélange des composants PC, AF et éventuellement C dans de l'eau (soit de l'eau du robinet, soit de l'eau distillée ou déminéralisée) avec s'il y a lieu l'un ou plusieurs des autres composants. Cette composition est introduite dans le circuit d'eau à protéger au niveau de la bâche alimentaire.

De façon pratique, le mélange aqueux PC + AF + C1 donne de bons résultats en ce qui concerne l'inhibition de la corrosion et de l'entartrage. S'il y a lieu, on peut encore améliorer l'inhibition de l'entartrage en ajoutant dans ce mélange un composant PE.

Le meilleur mode de mise en oeuvre de l'invention consiste à introduire, au niveau de la bâche alimentaire du circuit à protéger de l'inhibition et de l'entartrage, une composition contenant pour 1 litre d'eau :

(A) 10 à 50 mg de composant PC,
(B) 1 à 10 mg de composant AF, et
(C1) 5 à 50 mg de chlorure d'alkyldiméthylbenzylammonium.

D'autres avantages et caractéristiques de l'invention seront mieux compris à la lecture qui va suivre d'exemples de réalisation et d'essais. L'ensemble de ces éléments n'est pas limitatif mais est donné à titre d'illustration.

Par commodité, dans lesdits exemples

PC désigne le composé phosphonocarboxylique (quantité exprimée en matière sèche) du produit BRICORR® 288,
AF désigne l'oléylaminopropylèneamine (quantité exprimée en matière sèche), et
C1 désigne le chlorure d'alkyldiméthylbenzylammonium (quantité exprimée en matière sèche), qui est le tensioactif du produit NORANIUM® DA 50.

***Exemple 1***

On prépare une composition aqueuse contenant pour 1 litre d'eau :

PC 50 mg/l,
AF 5 mg/l,
C1 25 mg/l, et

de l'eau du robinet pour compléter jusqu'à 1 litre, en introduisant PC, AF et C1 dans une partie de l'eau puis en introduisant le complément d'eau requis.

***Exemple 2***

On procède comme indiqué à l'exemple 1 à partir des quantités suivantes :

PC 50 mg/l,
AF 10 mg/l, et
C1 25 mg/l.

***Essais anticorrosion et anti-tartre sur pilote***

On a résumé ci-après les essais anticorrosion ($\alpha$) et anti-tartre ($\beta$) entrepris et les résultats obtenus pour mettre en évidence la synergie de la composition selon l'invention, au moyen d'une installation pilote, représentée par la figure 1.

($\alpha$) L'eau contenue dans le bac récepteur (ou bâche alimentaire) référencé B d'un aéroréfrigérant 1 transite par un ballon 2 de deux litres dans lequel elle est chauffée à la température de l'essai (régulation par thermomètre à contact et boîtier de régulation électronique). Ce premier système de chauffage référencé $R_1$ peut amener l'eau à 60°C pour les besoins de l'essai. Si nécessaire ledit bac récepteur reçoit de l'eau d'appoint selon 6. On trouve ensuite un système de recirculation de l'eau à l'aide d'une pompe 3 dont on peut faire varier le débit à l'aide de la vanne référencée V. Le débit de l'eau dans le circuit est mesuré au moyen d'un débitmètre référencé D. Un système référencé $R_2$ permet, le cas échéant, le chauffage de l'eau à une température supérieure ou égale à la température fournie par $R_1$. A ce niveau, l'eau baigne la paroi extérieure d'un tube de chauffage en acier, qui permet de mesurer les incrustations sur paroi chaude et de les analyser par la suite. Un tube porte-éprouvettes 5 permet la mise en place de plaquettes ou tubes témoins pour détermination de la corrosivité de l'eau à la température de $R_2$.

A la sortie dudit tube 5, l'eau du circuit est dirigée selon la conduite 7 vers le système de refroidissement de l'eau (fonctionnant par échangeur air/eau) de l'aéroréfrigérant 1 avant son recyclage.
Le volume total du circuit est de 15 litres.
Le circuit pilote comporte également des dispositifs de mesure du pH et des dispositifs de prélèvement non représentés, pour analyse chimique de l'eau en circulation.
Les essais ont été réalisés avec des éprouvettes en acier (de type XC 35) et des éprouvettes en cuivre.
Les mesures de pertes de poids des éprouvettes $\Delta P$ ont été traduites en vitesse de corrosion V selon la relation :

$$V = \frac{10.\Delta P.365}{J.S.d}$$

dans laquelle

V = vitesse de corrosion exprimée en $\mu$m/an ;
$\Delta P$ = perte de poids exprimée en milligrammes ;
J = nombre de jours d'exposition au milieu agressif ;

S = surface externe de l'éprouvette exprimée en $cm^2$ ;
d = masse spécifique du métal de l'éprouvette exprimée en $g/cm^3$.

L'efficacité inhibitrice (pourcentage d'inhibition) est définie par la relation :

$$E\% = \frac{Vo-V}{Vo} x\ 100$$

où V et Vo représentent la vitesse de corrosion avec et respectivement sans inhibiteur.
Les résultats des essais anticorrosion, qui ont été obtenus avec le dispositif pilote de la figure 1 en utilisant comme fluide agressif de l'eau déminéralisée contenant 200 g/l de NaCl et maintenue à température ambiante (20°C) pendant une durée de 120 h avec un débit de fluide de 800 l/h, sont consignés dans le tableau I ci-après.

TABLEAU I

| **Essais d'anticorrosion** | | | | | |
|---|---|---|---|---|---|
| Produit | (1) | Vitesse de corrosion (µm/an) | | Efficacité (%) | |
| | | fer | cuivre | fer | cuivre |
| blanc | - | 865 | 2 | - | - |
| PC | 50 | 317 | 0 | 63,3 | 100 |
| PC | 100 | 356 | 0 | 58,8 | 100 |
| Ex 1<br>PC<br>AF<br>C1 | <br>50<br>5<br>25 | 154 | 0 | 82,5 | 100 |
| Note : (1) = concentration en matière sèche (en mg/l) | | | | | |

(β) Les essais anti-tartre ont été effectués avec le dispositif pilote de la figure 1, avec la différence que le tube porte-éprouvettes 5 a été enlevé. Les mesures ont été effectuées sur la prise de poids de la résistance chauffante $R_2$. Le fluide corrosif utilisé est identique à celui des essais anticorrosion : eau déminéralisée contenant 200 g/l de NaCl. Les mesures sont effectuées à 90°C au niveau de $R_2$, l'eau du circuit étant préalablement chauffée à 60°C au niveau de $R_1$, le débit étant de 800 l/h.

L'efficacité inhibitrice (pourcentage d'inhibition) est définie ici par la relation :

$$E\% = \frac{Po-P}{Po} x\ 100$$

où P et Po représentent le taux d'encrassement (exprimé en $g/m^2/j$) de la résistance $R_2$ avec et respectivement sans inhibiteur.
Les résultats obtenus après 100 h d'encrassement ont été consignés dans le tableau II ci-après.

TABLEAU II

| **Essais anti-tartre** | | |
|---|---|---|
| Produit | Taux d'encrassement ($g/m^2/j$) | inhibition (%) |
| blanc | 25 | - |
| PC (50 mg/l) | 4 | 84 |
| AF (5 mg/l) | 8 | 68 |
| C1 (25 mg/l) | 24 | 4 |
| Ex 1<br>PC (50 mg/l)<br>AF (5 mg/l) | 0,7 | 97,2 |

TABLEAU II (suite)

| Essais anti-tartre | | |
|---|---|---|
| Produit | Taux d'encrassement ($g/m^2/j$) | inhibition (%) |
| C1 (25 mg/l) | | |

***Essais électrochimiques***

Des essais électrochimiques ont été réalisés avec un second dispositif pilote illustré schématiquement par la figure 2. Ladite figure 2 représente un montage utilisé pour les mesures d'impédance. Le dispositif pilote comprend une cellule de mesures à 3 électrodes 20, 21 et 22, un potentiostat-galvanostat 12, un analyseur de fonction de transfert 13 et un oscilloscope 16 à deux voies. Le potentiel E de l'électrode de travail 20 est mesuré par rapport à une électrode de référence 22 au calomel saturée. Le courant I et le potentiel E sont contrôlés par le potentiostat 12 (SOLARTRON® 1286). Dans le cas où on impose un potentiel constant à l'électrode de travail 20, la mesure de l'intensité de courant qui traverse la cellule se fait à l'aide d'une contre-électrode 21 et d'une résistance étalon qui peut varier de 10 Ω à 1 MΩ. La valeur de cette résistance doit être proche de la valeur de l'impédance mesurée.

A la tension E de polarisation délivrée par le potentiostat 12, le générateur de l'analyseur de fonction de transfert 13 (SOLARTRON® 1250) permet de superposer un signal sinusoïdal de faible amplitude. L'analyseur calcule la partie réelle et la partie imaginaire de l'impédance complexe mesurée. La gamme de fréquences exploitées s'étend de 65 kHz à quelques mHz.

Un filtre double-voie 15 est utilisé pour améliorer la qualité des signaux obtenus notamment aux basses fréquences, en diminuant le rapport signal/bruit et pour fournir ainsi des mesures plus rapides. Le dispositif est généralement complété (comme indiqué plus haut) par un oscilloscope 16 à deux voies permettant le contrôle des signaux, en particulier leur amplitude et leur décalage à la composante continue.

Les essais sont réalisés en plusieurs exemplaires (au moins trois fois) afin de contrôler leur reproductibilité. Les courbes courant/tension sont tracées point par point à partir du potentiel de corrosion, en mode potentiostatique, dans le domaine anodique ou cathodique. Ces courbes sont corrigées de la chute ohmique calculée à partir des diagrammes d'impédance. Les densités de courant sont obtenues par extrapolation de la droite de TAFEL, après correction de diffusion sur la courbe cathodique. L'impression est réalisée au moyen de la table traçante 14.

Le dispositif pilote comporte un micro-ordinateur 11 commandant l'ensemble des dispositifs 12, 13 et 14. Le tout est monté et relié en réseau selon la ligne schématique 23.

On opère avec une électrode de travail qui est un cylindre de 1 $cm^2$ de section, en acier au carbone XC35 (dont la composition en éléments autres que le fer est la suivante : C = 0,35 % en poids, Mn = 0,65 % en poids, Si = 0,25 % en poids et P + S = 0,035 % en poids). Le cylindre est revêtu d'une gaine thermorétractable étanche. L'éprouvette en acier XC35 est vissée sur un axe de rotation et forme une électrode à disque tournante assurant une agitation constante et homogène au voisinage de la surface de travail. On utilise également une électrode au calomel saturée et une contre-électrode en platine de grande surface.

L'électrolyte contenu dans la cuve 19 est constitué par une solution de 200 mg/l de NaCl dans de l'eau déminéralisée. Le milieu est aéré. Les essais sont réalisés à la température contrôlée de 25°C au moyen du régulateur de température 17 qui fournit la cuve en électrolyte selon la conduite 18. L'eau qui a traversé ladite cuve est évacuée selon la flèche 18.

Les résultats des essais électrochimiques qui ont été obtenus sont consignés dans le tableau III ci-après, dans lequel sont données les valeurs de l'intensité ($I_{CORR}$) du courant de corrosion exprimée en $\mu A.cm^{-2}$, de la résistance de polarisation ($R_P$) exprimée en $\Omega.cm^2$ et du pourcentage d'efficacité (E %) calculé à partir de $I_{CORR}$ selon la relation :

$$E\% = \frac{I_{CORR}\ \text{(de l'essai à blanc)} - I_{CORR}\ \text{(du produit ou mélange testé)}}{I_{CORR}\ \text{(de l'essai à blanc)}} \times 100$$

TABLEAU III

| Essais électrochimiques | | | |
|---|---|---|---|
| Produit | $I_{CORR}$ ($\mu A.cm^{-2}$) | $R_P$ ($\Omega.cm^2$) | E (%) |
| blanc | 100 | 400 | - |

TABLEAU III (suite)

| Essais électrochimiques | | | |
|---|---|---|---|
| Produit | $I_{CORR}$ (µA.cm$^{-2}$) | $R_P$ (Ω.cm$^2$) | E (%) |
| PC (50 mg/l) | 15 | 10 000 | 85 |
| mélange<br>AF (10 mg/l)<br>C1 (25 mg/l) | 6 | 6 650 | 89 |
| Ex 2<br>PC (50 mg/l)<br>AF (10 mg/l)<br>C1 (25 mg/l) | 2 | 27 000 | 98 |

L'étude des valeurs de résistance de polarisation ($R_P$) met en évidence la synergie de la composition selon l'invention par rapport à PC et au mélange AF + C1.

## Revendications

1. Composition inhibitrice d'entartrage et de corrosion pour protéger les surfaces métalliques d'installations utilisant de l'eau en tant que fluide énergétique ou thermique, ladite composition, qui contient un composant phosphonocarboxylique (PC) et un composant amine grasse (AF), étant **caractérisée en ce qu'**elle comprend :

   (A) un composé phosphonocarboxylique choisi parmi l'ensemble constitué par :

   (a) les composés de formule I :

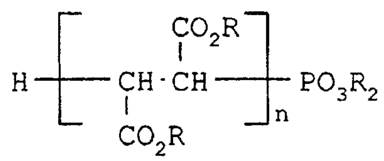

(I)

dans laquelle
n est un nombre entier tel que $1 \leq n \leq 8$, et chaque R représente indépendamment des autres un atome d'hydrogène, un atome d'un métal alcalin (notamment Na ou K), un groupe ammonium (notamment $NH_4^+$) ou un groupe alkyle en $C_1$-$C_4$, et
(b) leurs mélanges, et

   (B) au moins un composé amine grasse de formule II :

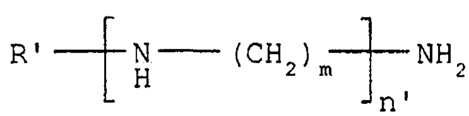

(II)

dans laquelle

R' représente un radical hydrocarboné aliphatique saturé ou insaturé en $C_{12}$-$C_{22}$,
m représente un nombre entier ayant une valeur comprise entre 2 et 8 inclus, et
n' représente un nombre entier ayant une valeur comprise entre 0 et 7 inclus.

2. Composition suivant la revendication 1, **caractérisée en ce qu'**elle comprend en outre

(C) un composant tensioactif (TA) intervenant en tant que dispersant.

**3.** Composition suivant l'une quelconque des revendications 1 et 2, **caractérisée en ce qu'**elle comprend

(A) 10 à 100 parties en poids de composant PC,
(B) 1 à 10 parties en poids de composant AF, et
(C) 5 à 50 parties en poids de composant TA.

**4.** Composition suivant la revendication 2 ou 3, **caractérisée en ce que** le composant TA est choisi parmi

(C1) les composés ammonium quaternaire du type alkyldiméthylammonium qui répondent à la formule III :

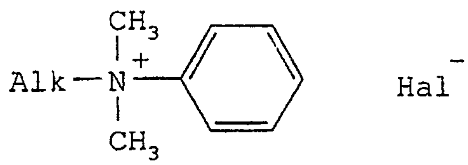

(III)

où Alk est un reste alkyle en $C_6$-$C_{22}$ à chaîne hydrocarbonée linéaire ou ramifiée, et Hal est un atome d'halogène (de préférence C1), et

leurs mélanges.

**5.** Composition suivant la revendication 2 ou 3, **caractérisée en ce que** le composant TA est

(C2) au moins un des composés amine oxyalkylénée de formule IV :

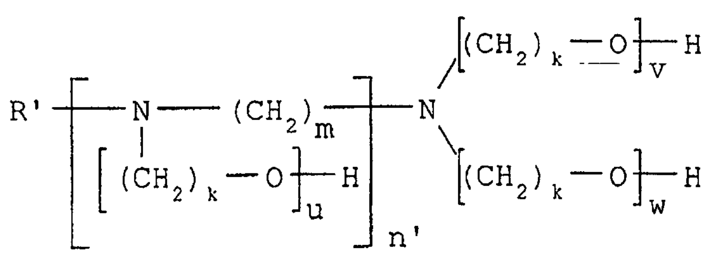

(IV)

dans laquelle
R', m et n' sont définis comme indiqué ci-dessus,
k est un nombre entier ayant pour valeur 2 ou 3,
u, v et w sont des nombres entiers tels que la somme v+w+(un') soit comprise entre 2 et 22.

**6.** Composition suivant la revendication 1, **caractérisée en ce qu'**elle renferme pour 1 litre d'eau :

(A) 10 à 50 mg de composant PC,
(B) 1 à 10 mg de composant AF, et
(C1) 5 à 50 mg de chlorure d'alkyldiméthylbenzylammonium.

## Claims

**1.** Composition for inhibiting scaling and corrosion, to protect the metal surfaces of plants using water as an energetic or thermal fluid, the said composition, which contains a phosphonocarboxylic (PC) component and a fatty amine (FA) component, being **characterised in that** it comprises:

(A) a phosphonocarboxylic compound chosen from the group consisting of:

(a) compounds of formula I:

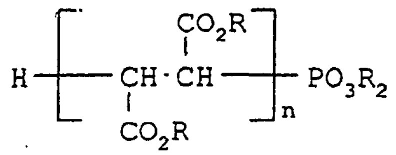

(I)

in which
n is an integer such that $1 \leq n \leq 8$, and each R represents, independently of the others, a hydrogen atom, an alkali metal atom (especially Na or K), an ammonium group (especially $NH_4^+$) or a $C_1$-$C_4$ alkyl group, and
(b) mixtures thereof, and

(B) at least one fatty amine compound of formula II:

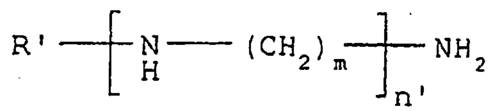

(II)

in which

R' represents a saturated or unsaturated aliphatic $C_{12}$-$C_{22}$ hydrocarbon-based radical,
m represents an integer having a value of between 2 and 8 inclusive, and
n' represents an integer having a value of between 0 and 7 inclusive.

**2.** Composition as claimed in Claim 1, **characterised in that** it also comprises

(C) a surfactant (SA) component acting as a dispersant.

**3.** Composition as claimed in any one of Claims 1 and 2, **characterised in that** it comprises

(A) 10 to 100 parts by weight of PC component,
(B) 1 to 10 parts by weight of FA component, and
(C) 5 to 50 parts by weight of SA component.

**4.** Composition as claimed in Claim 2 or 3, **characterised in that** the SA component is chosen from

(C1) quaternary ammonium compounds of the alkyldimethylammonium type corresponding to formula III:

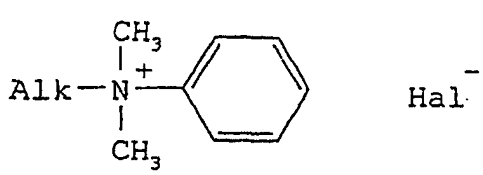

(III)

in which Alk is a $C_6$-$C_{22}$ alkyl residue containing a linear or branched hydrocarbon-based chain, and Hal is a halogen atom (preferably C1), and mixtures thereof.

**5.** Composition as claimed in Claim 2 or 3, **characterised in that** the SA component is

(C2) at least one of the oxyalkylenated amine compounds of formula IV:

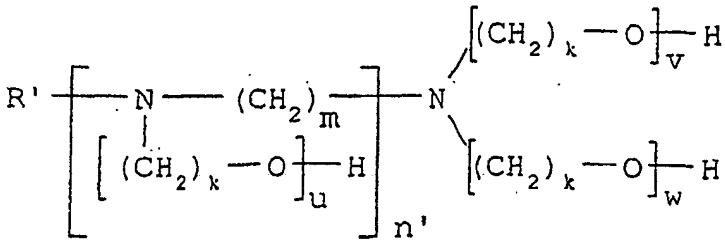

(IV)

in which

R', m and n' are defined as indicated above,
k is an integer having the value 2 or 3,
u, v and w are integers such that the sum v + w + (un') is between 2 and 22.

**6.** Composition as claimed in Claim 1, **characterised in that** it contains, per litre of water:

(A) 10 to 50 mg of PC component,
(B) 1 to 10 mg of FA component, and
(C1) 5 to 50 mg of alkyldimethylbenzylammonium chloride.

## Patentansprüche

**1.** Zusammensetzung zur Verhinderung von Ablagerungen und von Korrosion zum Schutz metallischer Oberflächen von Einrichtungen, die Wasser als energetisches oder thermisches Fluid verwenden, wobei die Zusammensetzung, die eine Phosphoncarbonsäureverbindung (PC) und eine Fettaminverbindung (AF) enthält, **dadurch gekennzeichnet ist, dass** sie folgendes umfasst:

(A) eine Phosphoncarbonsäureverbindung, ausgewählt aus der Gruppe, bestehend aus:

a) Verbindungen der Formel I:

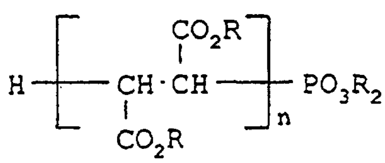

(I)

wobei n eine ganze Zahl ist und wobei $1 \leq n \leq 8$ ist und jedes R unabhängig voneinander ein Wasserstoffatom, ein Atom eines Alkalimetalls (insbesondere Na oder K), eine Ammoniumgruppe (insbesondere $NH_4^+$) oder eine $C_1$ bis $C_4$ Alkylgruppe darstellt und
b) deren Gemischen und

(B) wenigstens eine Fettaminverbindung der Formel II:

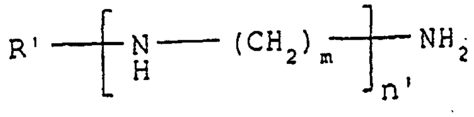 (II)

wobei

R' ein gesättigter oder ungesättigter aliphatischer $C_{12}$-$C_{22}$ Kohlenwasserstoffrest ist,
m eine ganze Zahl mit einem Wert, umfassend den Bereich zwischen 2 und 8, ist und
n' eine ganze Zahl mit einem Wert, umfassend den Bereich zwischen 0 und 7, ist.

**2.** Zusammensetzung gemäß Anspruch 1, **dadurch gekennzeichnet, dass** sie weiter umfasst

(C) eine grenzflächenaktive Verbindung (TA), die als Dispergierungsmittel wirkt.

**3.** Zusammensetzung gemäß einem der Ansprüche 1 und 2, **dadurch gekennzeichnet, dass** sie umfasst:

(A) 10 bis 100 Gewichtsteile der Verbindung PC
(B) 1 bis 10 Gewichtsteile der Verbindung AF und
(C) 5 bis 50 Gewichtsteile der Verbindung TA.

**4.** Zusammensetzung gemäß den Ansprüchen 2 oder 3, **dadurch gekennzeichnet, dass** die Verbindung TA ausgewählt ist aus

(C1) quartären Ammoniumverbindungen vom Typ Alkyldimethylammpnium gemäß der Formel III:

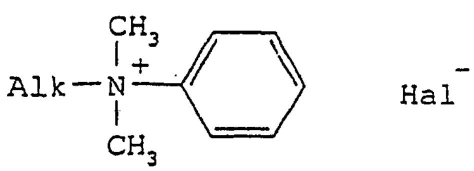 (III)

wobei Alk ein $C_6$-$C_{22}$ Alkylrest mit einer linearen oder verzweigten Kohlenwasserstoffkette ist und Hal ein Halogenatom (vorzugsweise C1) ist und Gemischen davon.

**5.** Zusammensetzung gemäß Anspruch 2 oder 3, **dadurch gekennzeichnet, dass** die Verbindung TA

(C2) wenigstens eine der oxyalkylierten Verbindungen der Formel IV ist:

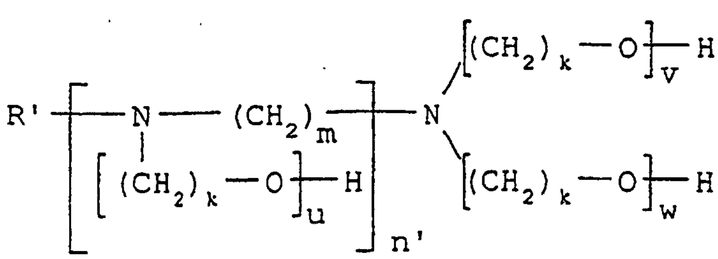 (IV)

wobei

R', m wie vorstehend definiert sind,

k eine ganze Zahl mit einem Wert von 2 oder 3 ist,
u, v, w ganze Zahlen sind und wobei die Summe v + w + (un') den Bereich von 2 bis 22 umfaßt.

**6.** Zusammensetzung gemäß Anspruch 1, **dadurch gekennzeichnet, dass** sie auf 1 Liter Wasser folgendes enthält:

(A) 10 bis 50 mg der Verbindung PC
(B) 1 bis 10 mg der Verbindung AF und
(C) 5 bis 50 mg Alkyldimethylbenzylammoniumchlorid

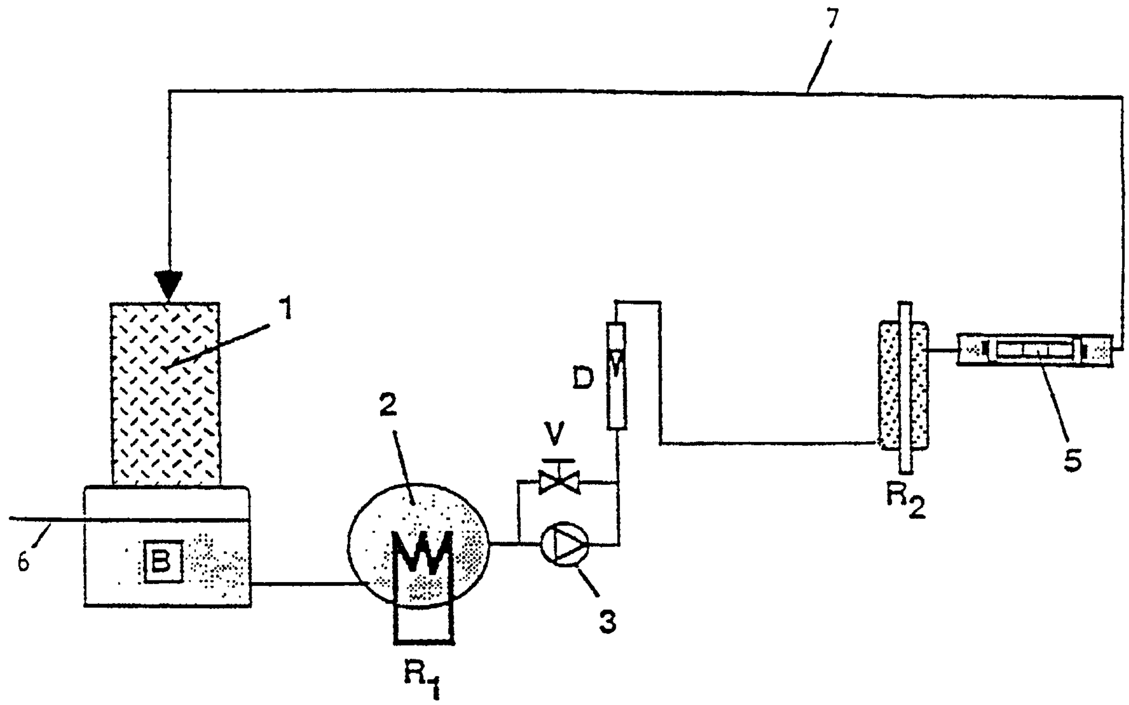


FIG. 1

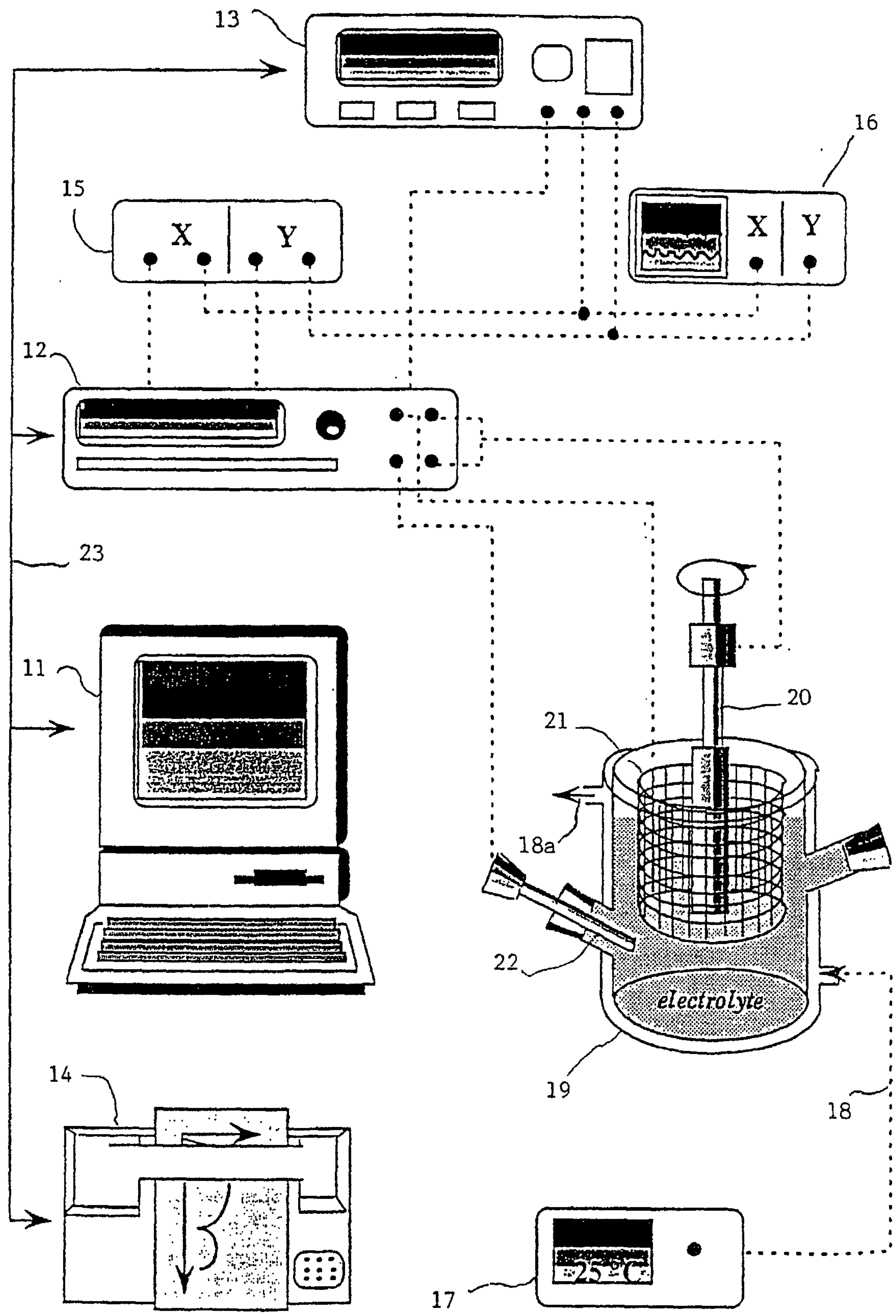


FIG. 2